(19) Europäisches Patentamt
European Patent Office
Office européen des brevets

(11) **EP 4 708 142 A1**

(12) **EUROPEAN PATENT APPLICATION**
published in accordance with Art. 153(4) EPC

(43) Date of publication:
**11.03.2026 Bulletin 2026/11**

(51) International Patent Classification (IPC):
**G06N 3/0495** (2023.01)    **G06N 3/084** (2023.01)
**G06N 3/082** (2023.01)

(21) Application number: **24815718.2**

(22) Date of filing: **25.04.2024**

(52) Cooperative Patent Classification (CPC):
**G06N 3/0495; G06N 3/08; G06N 3/082;
G06N 3/084**

(86) International application number:
**PCT/KR2024/005614**

(87) International publication number:
**WO 2024/248339 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.05.2023  KR 20230070321**

(71) Applicant: **Samsung Electronics Co., Ltd.
Suwon-si, Gyeonggi-do 16677 (KR)**

(72) Inventors:
• **JEON, Yongkweon**
  **Suwon-si Gyeonggi-do 16677 (KR)**
• **KIM, Hoyoung**
  **Suwon-si Gyeonggi-do 16677 (KR)**
• **PARK, Kyungphil**
  **Suwon-si Gyeonggi-do 16677 (KR)**
• **LEE, Chungman**
  **Suwon-si Gyeonggi-do 16677 (KR)**

(74) Representative: **Gulde & Partner
Patent- und Rechtsanwaltskanzlei mbB
Berliner Freiheit 2
10785 Berlin (DE)**

(54) **ELECTRONIC DEVICE AND METHOD FOR CONTROLLING ELECTRONIC DEVICE**

(57)    Disclosed are an electronic device and a method for controlling the electronic device. In particular, the electronic device according to the present disclosure comprises: a memory storing quantized first weight data of a neural network model; and a processor which acquires a first latent vector compressively representing an attribute of the first weight data, acquires a second latent vector compressively representing an attribute of input data of the neural network model, acquires a third latent vector by combining the first latent vector and the second latent vector, acquires a plurality of quantization adjustment values for changing a quantization level of each of a plurality of weights included in the first weight data by inputting the third latent vector to a quantization adjustment value acquisition module, and acquires second weight data changed such that the first weight data is optimized for the input data, on the basis of the first weight data and the plurality of quantization adjustment values.

FIG. 2

EP 4 708 142 A1

**Description**

[Technical Field]

The present disclosure relates to an electronic apparatus and a method for controlling an electronic apparatus, and more particularly, to an electronic apparatus capable of optimizing quantized weight data of a neural network model for input data, and a method for controlling the same.

[Background Art]

In recent years, technologies for lightening a neural network model have been developed, and in particular, such technologies have further advanced as attempts to efficiently implement the neural network model in an on-device form have continued.

In particular, in a technology for quantizing weight data of the neural network model that is represented in a high precision unit into weight data having a relatively low precision, a major issue has been raised in maintaining a level of precision required by the neural network model while improving computational efficiency.

However, in a related art concerning quantization, if weight data is acquired as a result of performing the quantization, the weight data acquired as a result of performing the quantization may be fixedly used in an inference process for the neural network model regardless of input data. Therefore, the related art has a limitation in that the quantized weight data is not optimized in consideration of various attributes of the input data.

[Disclosure of Invention]

[Solution to Problem]

The present disclosure provides an electronic apparatus capable of improving the precision of a neural network model by optimizing quantized weight data of the neural network model for input data, and a method for controlling the same.

According to an embodiment of the present disclosure, provided is an electronic apparatus including: a memory storing quantized first weight data of a neural network model; and a processor configured to acquire a first latent vector that compressively represents an attribute of the first weight data, acquire a second latent vector that compressively represents an attribute of input data of the neural network model, acquire a third latent vector by combining the first latent vector with the second latent vector, acquire a plurality of quantization adjustment values for changing a quantization level of each of a plurality of weights included in the first weight data by inputting the third latent vector into a quantization adjustment value acquisition module, and acquire second weight data in which the first weight data is changed to be optimized for the input data based on the first weight data and the plurality of quantization adjustment values.

The processor may be configured to acquire the first latent vector by backpropagating a predefined loss used for training the neural network model to the quantization adjustment value acquisition module.

The processor may be configured to acquire the second latent vector by inputting the input data into a latent vector acquisition module, the latent vector acquisition module includes an encoder for encoding an input vector to acquire an encoding vector and a decoder for decoding the encoding vector to acquire an output vector, and the latent vector acquisition module is trained to acquire the second latent vector based on a loss defined based on a difference between the input vector and the output vector.

The processor may be configured to acquire the third latent vector by concatenating the first latent vector with the second latent vector or by adding the first latent vector to the second latent vector.

The quantization adjustment value acquisition module may include a hidden vector acquisition module and a vector size change module, the hidden vector acquisition module may acquire a plurality of hidden vectors corresponding to respective ones of a plurality of layers based on the third latent vector, and the vector size change module may include layers corresponding to the respective ones of the plurality of layers and acquire the plurality of quantization adjustment values by changing the plurality of hidden vectors to correspond to sizes of the respective ones of the plurality of layers.

The processor may be configured to acquire the first weight data by quantizing unquantized weight data of the neural network model.

Each of the plurality of quantization adjustment values may have a value of 0 or 1, and the processor may be configured to acquire a plurality of integer weights by adding the plurality of weights included in the first weight data to the plurality of quantization adjustment values corresponding to the respective ones of the plurality of weights, and acquire the second weight data by multiplying a step size of quantization by respective ones of the plurality of integer weights.

According to an embodiment of the present disclosure, provided is a method for controlling an electronic apparatus, the method including: acquiring a first latent vector that compressively represents an attribute of quantized first weight data of a neural network model; acquiring a second latent vector that compressively represents an attribute of input data of the neural network model; acquiring a third latent vector by combining the first latent vector with the second latent vector; acquiring a plurality of quantization adjustment values for changing a quantization level of each of a plurality of weights included in the first weight data by inputting the third latent vector into a quantization adjustment value acquisition module; and acquiring second weight data in which the first weight data is changed to be optimized for the input data based on the first weight data and the plurality of quantization adjustment values.

The acquiring of the first latent vector may include acquiring the first latent vector by backpropagating a predefined loss used for training the neural network model to a quantization adjustment value acquisition module.

The acquiring of the second latent vector may include acquiring the second latent vector by inputting the input data into a latent vector acquisition module, the latent vector acquisition module may include an encoder for encoding an input vector to acquire an encoding vector and a decoder for decoding the encoding vector to acquire an output vector, and the latent vector acquisition module may be trained to acquire the second latent vector based on a loss defined based on a difference between the input vector and the output vector.

The acquiring of the third latent vector may include acquiring the third latent vector by concatenating the first latent vector with the second latent vector or by adding the first latent vector to the second latent vector.

The quantization adjustment value acquisition module may include a hidden vector acquisition module and a vector size change module, the hidden vector acquisition module may acquire a plurality of hidden vectors corresponding to respective ones of a plurality of layers based on the third latent vector, and the vector size change module may include layers corresponding to the respective ones of the plurality of layers and acquires the plurality of quantization adjustment values by changing the plurality of hidden vectors to correspond to sizes of the respective ones of the plurality of layers.

The first weight data may be acquired by quantizing unquantized weight data of the neural network model.

Each of the plurality of quantization adjustment values may have a value of 0 or 1, and in the acquiring of the second weight data, a plurality of integer weights may be acquired by adding the plurality of weights included in the first weight data to the plurality of quantization adjustment values corresponding to the respective ones of the plurality of weights, and the second weight data may be acquired by multiplying a step size of quantization by respective ones of the plurality of integer weights.

According to an embodiment of the present disclosure, provided is a non-transitory computer-readable recording medium including a program for executing a method for controlling an electronic apparatus, wherein the method includes acquiring a first latent vector that compressively represents an attribute of quantized first weight data of a neural network model, acquiring a second latent vector that compressively represents an attribute of input data of the neural network model, acquiring a third latent vector by combining the first latent vector with the second latent vector, acquiring a plurality of quantization adjustment values for changing a quantization level of each of a plurality of weights included in the first weight data by inputting the third latent vector into a quantization adjustment value acquisition module, and

acquiring second weight data in which the first weight data is changed to be optimized for the input data based on the first weight data and the plurality of quantization adjustment values.

[Brief Description of Drawings]

FIG. 1 is a block diagram briefly illustrating a configuration of an electronic apparatus according to at least one embodiment of the present disclosure;
FIG. 2 is a block diagram illustrating a neural network model and a plurality of modules according to at least one embodiment of the present disclosure;
FIG. 3 is a block diagram illustrating in detail a configuration of a latent vector acquisition module according to at least one embodiment of the present disclosure;
FIG. 4 is a block diagram illustrating in detail a configuration of a quantization adjustment value acquisition module according to at least one embodiment of the present disclosure;
FIG. 5 is a block diagram illustrating a detailed configuration of an electronic apparatus according to at least one embodiment of the present disclosure; and
FIG. 6 is a flowchart illustrating a method for controlling an electronic apparatus according to at least one embodiment of the present disclosure.

[Mode for Invention]

The present disclosure may be variously modified and have several embodiments, and specific embodiments of the present disclosure are thus illustrated in the accompanying drawings and described in detail in the specification. However, it should be understood that the scope of the present disclosure are not limited to specific embodiments, and include all modifications, equivalents, and alternatives according to an embodiment of the present disclosure. Throughout the accompanying drawings, similar components are denoted by similar reference numerals.

In describing the present disclosure, omitted is a detailed description of a case where it is decided that a detailed description of the known functions or configurations related to the present disclosure may unnecessarily obscure the gist of the present disclosure.

In addition, the following embodiment may be modified in several different forms, and the scope and spirit of the present disclosure are not limited to the following embodiments. Rather, these embodiments make the present disclosure thorough and complete, and are provided to completely convey the spirit of the present disclosure to those skilled in the art.

Terms used in the present disclosure are used only to describe the specific embodiments rather than limit the scope of the present disclosure. A term of a singular number may include its plural number unless explicitly indicated otherwise in the context.

In the present disclosure, the expression such as "have", "may have", "include", or "may include", indicates the presence of a corresponding feature (e.g., a numerical value, a function, an operation, or a component such as a part), and does not exclude the presence of an additional feature.

In the present disclosure, the expression such as "A or B", "least one of A and/or B", or "one or more of A and/or B" may include all possible combinations of items enumerated together. For example, "A or B", "at least one of A and B", or "at least one of A or B" may indicate all of 1) a case in which at least one A is included, 2) a case in which at least one B is included, or 3) a case in which both of at least one A and at least one B are included.

The expressions such as "first" and "second", used in the present disclosure, may indicate various components regardless of the sequence and/or importance of the components. These expressions are only used to distinguish one component and another component from each other, and do not limit the corresponding components.

If any component (e.g., a first component) is mentioned to be "(operatively or communicatively) coupled with/to" or "connected to" another component (e.g., a second component), it should be understood that the any component is directly coupled to another component or may be coupled to another component through yet another component (e.g., a third component).

On the other hand, if any component (e.g., the first component) is mentioned to be "directly coupled with/to" or "directly connected to" another component (e.g., the second component), it should be understood that yet another component (e.g., the third component) is not present between any component and another component.

An expression such as "configured (or set) to", used in the present disclosure, may be replaced by an expression such as "suitable for", "having the capacity to", "designed to", "adapted to", "made to", or "capable of", depending on a context. The expression "configured (or set) to" does not necessarily indicate "specifically designed to" in terms of hardware.

Instead, the expression "a device configured to", in any context, may indicate that the device may "perform~" together with another device or component. For example, a "processor configured (or set) to perform A, B, and C" may indicate a dedicated processor (e.g., an embedded processor) that may perform the corresponding operations or a generic-purpose processor (e.g., a central processing unit (CPU) or an application processor) that may perform the corresponding operations by executing one or more software programs stored in a memory device.

In the embodiments, a "module" or a "part" may perform at least one function or operation, and be implemented by hardware or software or be implemented by a combination of hardware and software. In addition, a plurality of "modules" or a plurality of "parts" may be integrated in at least one module and be implemented by at least one processor except for a "module" or a "part" that needs to be implemented by specific hardware.

Meanwhile, various elements and regions in the drawings are schematically illustrated. Therefore, the spirit of the present disclosure is not limited by relative sizes or intervals illustrated in the accompanying drawings.

Hereinafter, an embodiment of the present disclosure is described in detail with reference to the accompanying drawings so that those skilled in the art to which the present disclosure pertains may easily practice the present disclosure.

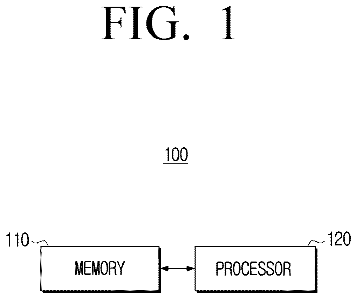

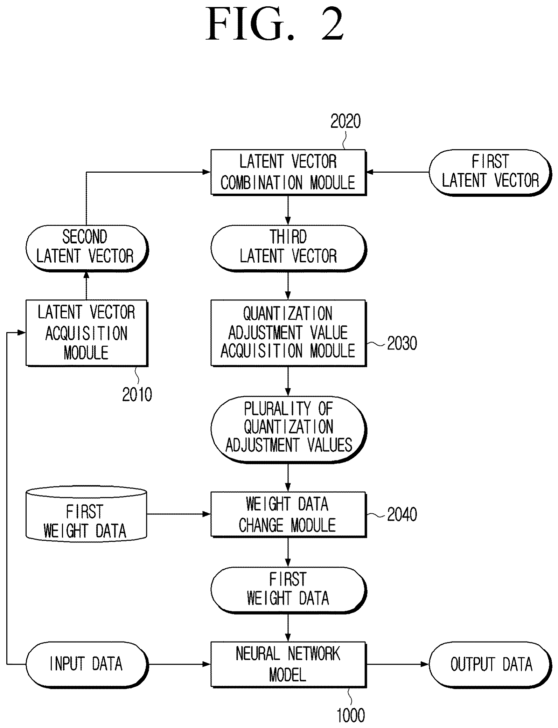

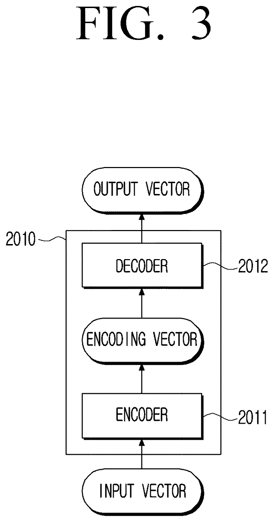

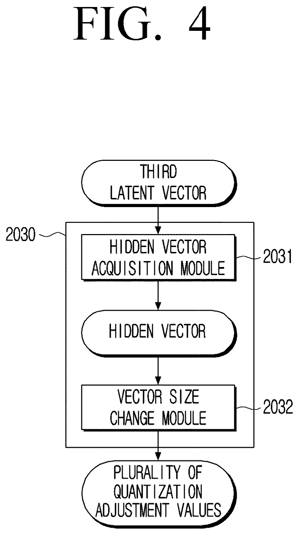

FIG. 1 is a block diagram briefly illustrating a configuration of an electronic apparatus 100 according to at least one embodiment of the present disclosure, and FIG. 2 is a block diagram illustrating a neural network model 1000 and a plurality of modules according to at least one embodiment of the present disclosure. In addition, FIG. 3 is a block diagram illustrating in detail a configuration of a latent vector acquisition module 2010 according to at least one embodiment of the present disclosure, and FIG. 4 is a block diagram illustrating in detail a configuration of a quantization adjustment value acquisition module 2030 according to at least one embodiment of the present disclosure. Hereinafter, the description is provided with reference to FIGS. 1 to 4 together.

The electronic apparatus 100 according to the present disclosure refers to an apparatus capable of optimizing quantized weight data of the neural network model 1000 for input data. For example, the electronic apparatus 100 may be implemented as a server, an edge computing device, a personal computer (PC), a smartphone, or the like, and is not limited to any particular type.

As illustrated in FIG. 1, the electronic apparatus 100 according to the present disclosure may include a memory 110 and a processor 120.

The memory 110 may store at least one instruction for the electronic apparatus 100. In addition, the memory 110 may store an operating system (O/S) for driving the electronic apparatus 100. In addition, the memory 110 may store various software programs or applications for operating the electronic apparatus 100 according to various embodiments of the present disclosure. In addition, the memory 110 may include a semiconductor memory such as a flash memory 110 or a magnetic storage medium such as a hard disk.

In detail, the memory 110 may store various software modules for operating the electronic apparatus 100 according to the various embodiments of the present disclosure, and the processor 120 may control operations of the electronic apparatus 100 by executing the various software modules stored in the memory 110. That is, the memory 110 may be accessed by the processor 120, and the processor 120 may perform reading, writing, modifying, deleting, updating, or the like of data.

Meanwhile, in the present disclosure, the term "memory 110" may be used to include the memory 110, a read-only memory (ROM, not shown) and a random access memory (RAM, not shown) in the processor 120, or a memory card (not shown, e.g., a micro secure digital (SD) card or a memory stick) mounted on the electronic apparatus 100.

In particular, according to the various embodiments of the present disclosure, the memory 110 may store quantized first weight data of the neural network model 1000. In detail, the processor 120 may acquire first weight data by quantizing unquantized weight data of the neural network model 1000, and may store the acquired first weight data in the memory 110. In addition, the quantization may be performed by an external device, and the processor 120 may acquire the first weight data by receiving the first weight data from the external device through a communication unit 130, and may store the acquired first weight data in the memory 110.

The "quantization" refers to a process of converting weight data represented in a high-precision unit into weight data having a relatively low precision. That is, the quantization refers to a process of converting weight data represented in a first bit range into weight data represented in a second bit range smaller than the first bit range.

In the present disclosure, the "unquantized weight data" may refer to weight data represented in a 32-bit floating point (FP32) scheme. In addition, the "first weight data" may refer to weight data having a bit-width of less than 32 bits, that is, weight data acquired as a result of the quantization.

Meanwhile, a type of the neural network model 1000 according to the present disclosure and a type of the weight data of the neural network model 1000 are not limited to specific types, and a method of quantizing the weight data is not limited to any particular method. For example, the various embodiments according to the present disclosure may be applied to various quantization methods such as a single-precision method, a mixed-precision method, a quantization-aware training (QAT) method, and a post-training quantization (PTQ) method.

Meanwhile, the memory 110 may store various data such as data regarding the neural network model 1000, data regarding various modules according to the present disclosure, a latent vector, a plurality of quantization adjustment values, and data for training the neural network model 1000 and/or the various modules. In addition, the memory 110 may store various information necessary for achieving objectives of the present disclosure, and information stored in the memory 110 may also be updated as the information is received from the external device or input by a user.

The processor 120 may control overall operations of the electronic apparatus 100. In detail, the processor 120 may be connected to the configuration of the electronic apparatus 100 including the memory 110, and may control the overall operations of the electronic apparatus 100 by executing at least one instruction stored in the memory 110 as described above.

The processor 120 may be implemented in various forms. For example, the processor 120 may be implemented as at least one of an application specific integrated circuit (ASIC), an embedded processor 120, a microprocessor 120, hardware control logic, a hardware finite state machine (FSM), or a digital signal processor (DSP) 120. Meanwhile, in the present disclosure, the term "processor 120" may be used to include a central processing unit (CPU), a graphic processing unit (GPU), and a micro processor unit (MPU).

In particular, according to the various embodiments of the present disclosure, the processor 120 may optimize the quantized weight data (that is, the first weight data as described above) of the neural network model 1000 for input data by using a plurality of modules. At least one of the plurality of modules may be implemented as a software module or a hardware module.

Hereinafter, the various embodiments according to the present disclosure, implemented by the processor 120 and the plurality of modules are described with reference to FIG. 2 together. As illustrated in FIG. 2, the plurality of modules may include a latent vector acquisition module 2010, a latent vector combination module 2020, a quantization adjustment value acquisition module 2030, and a weight data change module 2040.

In detail, the processor 120 may acquire a first latent vector that compressively represents an attribute of the first weight data. Here, a "latent vector" refers to a low-dimensional vector representing a core attribute (or a main feature) of given data, and may be referred to as a vector that is compressively represented as an important attribute/feature of the given data is encoded (embedded). Meanwhile, in the present disclosure, the term "vector" is not limited to one-dimensional data, and may therefore be replaced with a term such as "tensor" or "matrix."

In particular, in the present disclosure, the term "first latent vector" is used to refer to a vector that compressively represents the attribute of the first weight data. The first latent vector may be acquired for each layer, each channel, or each block of the neural network model 1000.

In detail, the processor 120 may train the quantization adjustment value acquisition module 2030 by backpropagating a loss used for training the neural network model 1000 to the quantization adjustment value acquisition module 2030, and may acquire the first latent vector by using the trained quantization adjustment value acquisition module 2030.

In other words, the loss used for training the neural network model 1000 may be backpropagated not only through the plurality of layers included in the neural network model 1000, but also to layers included in the quantization adjustment value acquisition module 2030. Accordingly, the quantization adjustment value acquisition module 2030 may be trained to acquire the first latent vector that compressively represents the attribute of the first weight data. A more detailed description of the quantization adjustment value acquisition module 2030 is provided below.

Meanwhile, a loss used in a training process of the quantization adjustment value acquisition module 2030 may be defined for each layer or each predefined block of the neural network model 1000, and may also be defined to correspond to an entire process of the neural network model 1000. In addition, a type of loss may be defined as a function value of various loss functions such as an L1 loss, an L2 loss, a mean squared error (MSE), or a root mean squared error (RMSE), and is not limited to any particular type.

The processor 120 may acquire a second latent vector that compressively represents an attribute of the input data of the neural network model 1000. In detail, the processor 120 may acquire the second latent vector by using the latent vector acquisition module 2010. The latent vector acquisition module 2010 refers to a trained module including a neural network, and particularly refers to a module trained to acquire the second latent vector according to the present disclosure. Here, the term "second latent vector" refers to a term for referring to a vector that compressively represents the attribute of the input data of the neural network model 1000.

As illustrated in FIG. 3, the latent vector acquisition module 2010 may be an auto-encoder including an encoder 2011 and a decoder 2012. The encoder 2011 may encode an input vector to acquire an encoding vector, and the decoder 2012 may decode the acquired encoding vector to acquire an output vector. In addition, the latent vector acquisition module 2010 may be trained to acquire the second latent vector based on a loss defined based on a difference between the input vector and the output vector.

In other words, the latent vector acquisition module 2010 may operate to encode the input vector into the encoding vector and then decodes the latent vector to reconstruct a vector as similar as possible to the input vector. Accordingly, the encoding vector may compressively represent the attribute of the input vector, and the latent vector acquisition module 2010 may thus acquire the second latent vector that compressively represents the attribute of the input data if the input data according to the present disclosure is input into the latent vector acquisition module 2010.

The processor 120 may acquire a third latent vector by combining the first latent vector with the second latent vector. In detail, the processor 120 may acquire the third latent vector by using the latent vector combination module 2020. The latent vector combination module 2020 refers to a module capable of acquiring the third latent vector by combining the first latent vector with the second latent vector, and the "third latent vector" may be defined as a vector that compressively represents the attribute of the first weight data and the attribute of the input data.

In detail, the latent vector combination module 2020 may acquire the third latent vector by concatenating the first latent vector with the second latent vector or by adding the first latent vector to the second latent vector (that is, summation or addition). Here, concatenation refers to an operation of attaching vectors (or tensors) to generate a larger vector (or tensor) and to expand dimensions. The latent vector combination module 2020 may perform various operations between the first latent vector and the second latent vector in addition to concatenation and addition.

The processor 120 may acquire a plurality of quantization adjustment values for changing a quantization level of each of a plurality of weights included in the first weight data by inputting the third latent vector into the quantization adjustment value acquisition module 2030. The quantization adjustment value acquisition module 2030 refers to a trained module including a neural network, and particularly refers to a module trained to acquire the quantization adjustment value according to the present disclosure.

In the present disclosure, the term "quantization adjustment value" is used as a general term for a value for changing the quantization level of each of the plurality of weights included in the first weight data. In detail, each of the plurality of quantization adjustment values is a value for changing each of the plurality of weights included in the first weight data to be optimized for the input data, and may be acquired in a number equal to the number of the plurality of weights.

In addition, the plurality of quantization adjustment values may be optimized between 0 and 1 during the training process of the quantization adjustment value acquisition module 2030 as described above, and may finally converge to 0 or 1. That is, each of the plurality of quantization adjustment values has a value of 0 or 1, and thus may be used as a value for maintaining or increasing by 1 the quantization level of each of the plurality of weights included in the first weight data.

As illustrated in FIG. 4, the quantization adjustment value acquisition module 2030 may include a hidden vector acquisition module 2031 and a vector size change module 2032.

The hidden vector acquisition module 2031 refers to a module capable of acquiring a plurality of hidden vectors corresponding to respective ones of the plurality of layers based on the third latent vector. Here, each of the plurality of hidden vectors refers to a vector for representing an attribute of each of the plurality of layers. In detail, the hidden vector refers to one of activations of layers included in the quantization adjustment value acquisition module 2030. In detail, each of the plurality of hidden vectors may be regarded as the third latent vector decomposed by the plurality of layers, and may thus correspond to the attribute of each of the plurality of layers.

The vector size change module 2032 refers to a module capable of acquiring the plurality of quantization adjustment values by changing sizes of the hidden vectors. In detail, the vector size change module 2032 may include layers corresponding to the respective ones of the plurality of layers, and may acquire the plurality of quantization adjustment values by changing the plurality of hidden vectors to correspond to sizes of the respective ones of the plurality of layers.

In detail, a size of the weight data of each of the plurality of layers, that is, the number of weights, may be different for each layer, and the quantization adjustment value acquisition module 2030 may thus be required to adjust the number of output values to correspond to the number of weights of each of the plurality of layers. Therefore, the vector size change module 2032 may change the size of each of the plurality of hidden vectors corresponding to the attribute of each of the plurality of layers. For example, a process of adjusting the number of output values to correspond to the number of weights of each of the plurality of layers may be performed based on a matrix multiplication operation on the hidden vector corresponding to each of the plurality of layers and the weight data corresponding to each of the plurality of layers, and is not limited thereto.

The processor 120 may acquire second weight data in which the first weight data is changed to be optimized for the input data based on the first weight data and the plurality of quantization adjustment values. In detail, the processor 120 may acquire the second weight data by using the weight data change module 2040. The weight data change module 2040 refers to a module capable of changing the first weight data into the second weight data.

The weight data change module 2040 may acquire a plurality of integer weights by adding the plurality of weights included in the first weight data to the plurality of quantization adjustment values corresponding to the respective ones of the plurality of weights. In addition, the weight data change module 2040 may finally acquire the second weight data by multiplying a step size of quantization by respective ones of the plurality of integer weights.

For example, in a case where the weight data represented in the FP32 scheme is quantized into 8 bits to acquire the first weight data represented as an integer from 0 to 225, if a first weight included in the first weight data is 210/256 and a quantization adjustment value corresponding to the first weight is 1, the weight data change module 2040 may acquire a quantized weight of 211/256 by adding 1 to an integer weight (quantization level) of 201 corresponding to a second weight and then multiplying a step size of 1/256 thereto. Meanwhile, if a second weight included in the first weight data is 200/256 and the quantization adjustment value corresponding to the first weight is 0, the weight data change module 2040 may acquire a quantized weight of 201/256 by maintaining an integer weight corresponding to the second weight and multiplying a step size of 1/256 thereto.

Meanwhile, the first weight data and the second weight data described above may be expressed by the following equations.

[Equation 1]

$$W_1 = s \cdot W_{int}.$$

[Equation 2]

$$W_2 = s \cdot (W_{int} + W_{adj}).$$

Here, $W_1$ denotes a weight included in the first weight data, $W_2$ denotes a weight included in the second weight data, $W_{int}$ denotes an integer weight of $W_1$, $W_{adj}$ denotes the quantization adjustment value, and $s$ denotes a step size.

If the processor 120 quantizes weight data before the quantization, the processor 120 may acquire the weight $W_1$ expressed as a product of the step size $s$ and the integer weight $W_{int}$. In addition, if the quantization adjustment value $W_{adj}$ is acquired according to the above-described embodiments, the processor 120 may acquire the weight included in the second weight data by adding the integer weight $W_{int}$ to the quantization adjustment value $W_{adj}$ and multiplying the step size $s$ by the added value.

In the embodiments according to the present disclosure, an update target is the quantization adjustment value $W_{adj}$, and the quantization adjustment value $W_{adj}$ may be acquired through learning in a latent space rather than in a weight space. In addition, the quantization adjustment value $W_{adj}$ may be determined by the second latent vector reflecting the attribute of the input data, and the second weight data optimized based on the input data may thereby be acquired.

If the second weight data is acquired as described above, the processor 120 may change a weight of each of the plurality of layers included in the neural network model 1000 into the weight included in the second weight data, and may acquire output data by performing an inference process for the input data. In detail, the processor 120 may store the acquired second weight data in the memory 110, and load the second weight data stored in the memory 110 before performing the inference process, thereby performing a computational process for the input data based on the second weight data.

According to the various embodiments described above, the electronic apparatus 100 may improve precision of the neural network model 1000 by optimizing the quantized weight data of the neural network model for the input data. In other words, the electronic apparatus 100 may generate the optimized weight data in real time and dynamically by considering the attribute of each of various input data, and thereby may further increase accuracy of the neural network model 1000.

Meanwhile, the description hereinabove describes an embodiment in which the first latent vector and the second latent vector are combined to acquire the third latent vector and the third latent vector is input into the quantization adjustment value acquisition module 2030 to acquire the plurality of quantization adjustment values according to the present disclosure. However, according to another embodiment, the plurality of quantization adjustment values may be acquired by inputting the first latent vector into the quantization adjustment value acquisition module 2030 without using the second latent vector.

That is, according to an embodiment in which only the first latent vector is input into the quantization adjustment value acquisition module 2030 to acquire the plurality of quantization adjustment values, the second latent vector is not used, and thus the latent vector acquisition module 2010 and the latent vector combination module 2020 in FIG. 2 are not used.

If the plurality of quantization adjustment values are acquired by inputting only the first latent vector into the quantization adjustment value acquisition module 2030, the attribute of quantized weight data may be reflected although the attribute of the input data is not reflected in the acquisition of the second weight data because the second latent vector is not used, and the weight data may be efficiently optimized because the number of parameters used for training may be reduced relative to a case of using entire parameters of the neural network model 1000.

Meanwhile, the latent vector acquisition module 2010 and the quantization adjustment value acquisition module 2030 according to the present disclosure may each include a neural network, and at least one of the latent vector acquisition module 2010 or the quantization adjustment value acquisition module 2030 may thus be implemented as a single model integrated with the neural network model 1000.

Meanwhile, the latent vector acquisition module 2010, the quantization adjustment value acquisition module 2030, and the neural network model 1000 may be trained respectively based on a loss defined for each module or model, and may also be trained integrally based on a single loss. For example, the latent vector acquisition module 2010, the quantization adjustment value acquisition module 2030, and the neural network model 1000 may be trained based on a loss defined based on a difference between inputs and outputs of the latent vector acquisition module 2010 and each module, and may also be trained based on backpropagation of a loss defined based on a difference between the input and output of the neural network model 1000.

Meanwhile, the description hereinabove is provided assuming a case where the latent vector acquisition module 2010, the quantization adjustment value acquisition module 2030, and the neural network model 1000 are all implemented by the electronic apparatus 100. However, at least one of the latent vector acquisition module 2010, the quantization adjustment value acquisition module 2030, or the neural network model 1000 may be implemented by the external device, and the electronic apparatus 100 may perform the operations according to the various embodiments of the present disclosure through data transmission/reception with the external device.

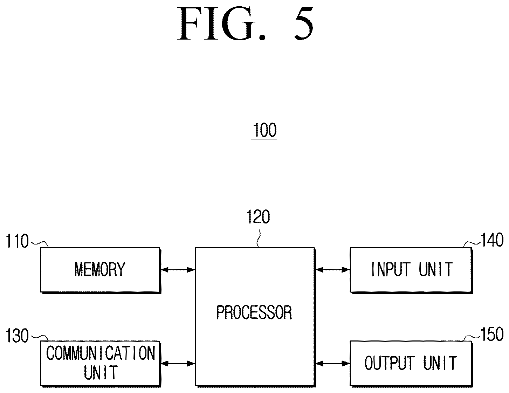

FIG. 5 is a block diagram illustrating a detailed configuration of the electronic apparatus 100 according to at least one embodiment of the present disclosure.

As illustrated in FIG. 5, the electronic apparatus 100 according to the present disclosure may further include the communication unit 130, an input unit 140, and an output unit 150 in addition to the memory 110 and the processor 120. However, the configurations as illustrated in FIGS. 1 and 5 are merely exemplary, and in implementing the present disclosure, a new configuration may be added or some configurations may be omitted in addition to those illustrated in FIGS. 1 and 5.

The communication unit 130 may include circuitry, and may communicate with the external device. In detail, the processor 120 may receive various data or information from the external device connected thereto through the communication unit 130, and may also transmit various data or information to the external device.

The communication unit 130 may include at least one of a wireless fidelity (Wi-Fi) module, a Bluetooth module, a wireless communication module, a near field communication (NFC) module, or an ultra-wide band (UWB) module. In detail, the Wi-Fi module and the Bluetooth module may perform communication in a Wi-Fi scheme and a Bluetooth scheme, respectively. If the Wi-Fi module or the Bluetooth module is used, the communication unit 130 may first transmit/receive various connection information such as a service set identifier (SSID), establish a communication connection by using the same, and then transmit/receive various information.

In addition, the wireless communication module may perform communication according to various communication standards such as IEEE, Zigbee, 3rd generation (3G), 3rd generation partnership project (3GPP), long term evolution (LTE), and 5th generation (5G). In addition, the NFC module may perform communication in a near field communication (NFC) scheme using a 13.56 MHz band among various radio frequency identification (RF-ID) frequency bands such as 135 kHz, 13.56 MHz, 433 MHz, 860-960 MHz, and 2.45 GHz. In addition, through communication between UWB antennas, the UWB module may accurately measure a time of arrival (ToA) at which a pulse reaches a target and an angle of arrival (AoA) at a trasmission device, thereby making precise distance and position recognition possible indoors within an error range of several tens of centimeters.

In particular, according to the various embodiments of the present disclosure, the processor 120 may receive, from the external device through the communication unit 130, the various data such as the data regarding the neural network model 1000, the data regarding the various modules according to the present disclosure, the latent vector, the plurality of quantization adjustment values, and the data for training the neural network model 1000 and/or the various modules.

In addition, if at least one of the latent vector acquisition module 2010, the quantization adjustment value acquisition module 2030, or the neural network model 1000 according to the present disclosure is implemented by the external device, the processor 120 may transmit/receive the input/output data regarding the latent vector acquisition module 2010, the quantization adjustment value acquisition module 2030, or the neural network model 1000 from/to the external device through the communication unit 130, thereby performing the operations according to the various embodiments of the present disclosure.

The input unit 140 may include circuitry, and the processor 120 may receive, through the input unit 140, a user command for controlling the operations of the electronic apparatus 100. In detail, the input unit 140 may include at least one of a microphone, a camera, or a remote-control signal receiving unit. In addition, the input unit 140 may be implemented in a form included in a display as a touch screen.

The camera may acquire an image of at least one object. In detail, the camera may include an image sensor, and the image sensor may convert light entering through a lens into an electrical image signal.

The microphone may acquire a signal regarding a sound or a voice generated outside the electronic apparatus 100. In detail, the microphone may acquire vibrations caused by the sound or the voice generated outside the electronic apparatus 100, and may convert the acquired vibrations into an electrical signal.

In particular, according to the various embodiments of the present disclosure, the processor 120 may receive, through the input unit 140, user input such as user input for quantizing the unquantized weight data or user input for performing the training process of the latent vector acquisition module 2010, the quantization adjustment value acquisition module 2030, or the neural network model 1000.

The output unit 150 may include circuitry, and the processor 120 may output, through the output unit 150, various functions that the electronic apparatus 100 may perform. In addition, the output unit 150 may include at least one of a display, a speaker, or an indicator.

The display may output image data under control of the processor 120. In detail, the display may output an image pre-stored in the memory 110 under the control of the processor 120. In particular, the display according to an embodiment of the present disclosure may also display a user interface (UI) stored in the memory 110. The display may be implemented as a liquid crystal display (LCD) panel, organic light emitting diodes (OLED), or the like, and in some cases, the display may also be implemented as a flexible display or a transparent display. However, the display according to the present disclosure is not limited to any specific type.

The speaker may output audio data under the control of the processor 120, and the indicator may be turned on under the control of the processor 120.

In particular, according to the various embodiments of the present disclosure, the processor 120 may output, through the output unit 150, information indicating that a quantization process according to the present disclosure is completed, and information indicating that a process of acquiring the second weight data changed to be optimized for the input data is completed.

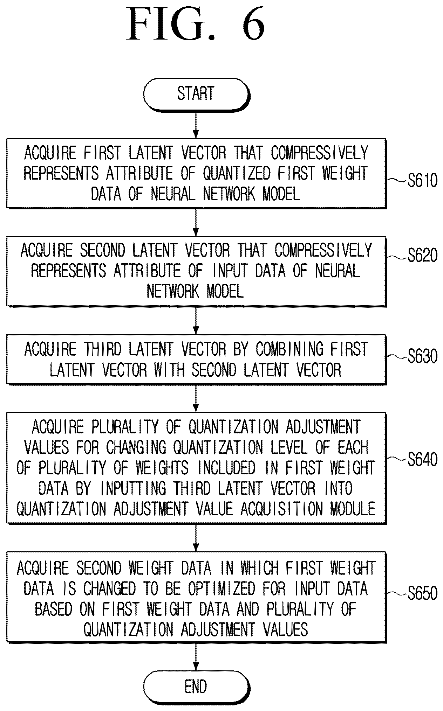

FIG. 6 is a flowchart illustrating a method for controlling an electronic apparatus 100 according to at least one embodiment of the present disclosure.

As illustrated in FIG. 6, the electronic apparatus 100 may acquire the first latent vector that compressively represents the attribute of the quantized first weight data of the neural network model 1000 (S610). Here, the first weight data refers to weight data acquired as a result of quantizing the weight data of the neural network model and may be stored in the memory of the electronic apparatus.

In detail, the electronic apparatus 100 may train the quantization adjustment value acquisition module 2030 by backpropagating the loss used for training the neural network model 1000 to the quantization adjustment value acquisition module 2030, and may acquire the first latent vector by using the trained quantization adjustment value acquisition module 2030.

The electronic apparatus 100 may acquire the second latent vector that compressively represents the attribute of the input data of the neural network model 1000 (S620). In detail, the electronic apparatus 100 may acquire the second latent vector by using the latent vector acquisition module 2010 including the encoder 2011 for encoding the input vector to acquire the encoding vector and the decoder 2012 for decoding the acquired encoding vector to acquire the output vector.

The electronic apparatus 100 may acquire a third latent vector by combining the first latent vector with the second latent vector (S630). In detail, the electronic apparatus 100 may acquire the third latent vector by concatenating the first latent vector with the second latent vector or by adding the first latent vector to the second latent vector.

The electronic apparatus 100 may acquire the plurality of quantization adjustment values for changing the quantization level of each of the plurality of weights included in the first weight data by inputting the third latent vector into the quantization adjustment value acquisition module 2030 (S640). In detail, the electronic apparatus 100 may acquire the plurality of hidden vectors corresponding to the respective ones of the plurality of layers based on the third latent vector and may acquire the plurality of quantization adjustment values by changing the sizes of the hidden vectors.

The electronic apparatus 100 may acquire the second weight data in which the first weight data is changed to be optimized for the input data based on the first weight data and the plurality of quantization adjustment values (S650). In detail, the electronic apparatus 100 may acquire the plurality of integer weights by adding the plurality of weights included in the first weight data to the plurality of quantization adjustment values corresponding to the respective ones of the plurality of weights. In addition, the weight data change module 2040 may finally acquire the second weight data by multiplying the step size of the quantization by respective ones of the plurality of integer weights.

Meanwhile, the method for controlling an electronic apparatus 100 according to an embodiment described above may be implemented as a program and provided to the electronic apparatus 100. In particular, the program including the method for controlling an electronic apparatus 100 may be provided by being stored in a non-transitory computer-readable medium.

In detail, in the non-transitory computer-readable recording medium including a program for executing the method for controlling an electronic apparatus 100, the method for controlling an electronic apparatus 100 may include acquiring the first latent vector that compressively represents the attribute of the quantized first weight data of the neural network model 1000, acquiring the second latent vector that compressively represents the attribute of the input data of the neural network model 1000, acquiring the third latent vector by combining the first latent vector with the second latent vector, acquiring the plurality of quantization adjustment values for changing the quantization level of each of the plurality of weights included in the first weight data by inputting the third latent vector into a quantization adjustment value acquisition module, and acquiring the second weight data in which the first weight data is changed to be optimized for the input data based on the first weight data and the plurality of quantization adjustment values.

Although the method for controlling an electronic apparatus 100 and the computer-readable recording medium including the program for executing the method for controlling an electronic apparatus 100 are briefly described above, which is provided merely to omit any redundant description, and the various embodiments regarding the electronic apparatus 100 may also be applied to the method for controlling an electronic apparatus 100 and to the computer-readable recording medium including the program for executing the method for controlling an electronic apparatus 100.

According to the various embodiments of the present disclosure as described above, the electronic apparatus 100 may improve the precision of the neural network model 1000 by optimizing the quantized weight data of the neural network model for the input data. In other words, the electronic apparatus 100 may generate the optimized weight data in real time and dynamically by considering the attribute of each of the various input data, and thereby may further increase the accuracy of the neural network model 1000.

Functions related to artificial intelligence according to the present disclosure may be operated by using the processor 120 and the memory 110 included in the electronic apparatus 100.

The processor 120 may include one or more processors 120. Here, at least one processor 120 may include at least one of a central processing unit (CPU), a graphics processing unit (GPU), or a neural processing unit (NPU), and is not limited to the above-described examples of the processors 120.

The CPU refers to a generic-purpose processor 120 capable of performing not only general operations but also artificial intelligence (AI) operations, and may efficiently execute complex programs by using a multi-layered cache structure. The CPU may be advantageous for a serial processing method that enables organic linkage between a previous operation result and a next operation result through sequential operations. The generic-purpose processor 120 is not limited to the above-described examples unless specified as the above-mentioned CPU.

The GPU refers to the processor 120 for large-scale operations, such as floating-point operations used in graphics processing, and may perform the large-scale operations in parallel by integrating a large number of cores. In particular, the GPU may be advantageous for parallel operations such as convolution operations compared to the CPU. In addition, the GPU may be used as the co-processor 120 to supplement functions of the CPU. The processor for large-scale operations is not limited to the above-described example unless specified as the above-mentioned GPU.

The NPU refers to a processor 120 specialized for the artificial intelligence operation using an artificial neural network, and may implement each layer included in the artificial neural network in hardware (e.g., silicon). Here, the NPU is specially designed based on requirements of a company, and may thus have a lower degree of freedom than the CPU or the GPU. However, the NPU may efficiently process the artificial intelligence operation required by the company. Meanwhile, as the processor 120 specialized for the artificial intelligence operation, the NPU may be implemented in various forms such as a tensor processing unit (TPU), an intelligence processing unit (IPU), or a vision processing unit (VPU). The artificial intelligence processor 120 is not limited to the above-described example unless specified as the above-mentioned NPU.

In addition, at least one processor 120 may be implemented as a system-on-chip (SoC). Here, the SoC may further include the memory 110, and a network interface, such as a bus, for data communication between the processor 120 and the memory 110, in addition to at least one processor 120.

If the electronic apparatus 100 includes the plurality of processors 120 in the system-on-chip (SoC), the electronic apparatus 100 may perform an artificial intelligence operation (e.g., an operation related to learning or inference of an artificial intelligence model) by using some of the plurality of processors 120. For example, the electronic apparatus 100 may perform the artificial intelligence operation by using at least one of the GPU, the NPU, the VPU, the TPU, or a hardware accelerator that is specialized for the artificial intelligence operation, such as a convolution operation or a matrix multiplication operation, among the plurality of processors. However, this configuration is only one embodiment, and the electronic apparatus may process the artificial intelligence operation by using the generic-purpose processor 120 such as the CPU.

In addition, the electronic apparatus 100 may perform the operation related to the artificial intelligence function by using multiple cores (e.g., dual-core or quad-core) included in one processor 120. In particular, the electronic apparatus 100 may perform the artificial intelligence operation such as the convolution operation or the matrix multiplication operation in parallel by using multiple cores included in the processor 120.

At least one processor 120 may control the processing of input data according to a predefined operation rule or the artificial intelligence model, stored in the memory 110. The predefined operation rule or the artificial intelligence model may be generated by learning.

Here, "generated by learning" may refer to that the predefined operation rule or artificial intelligence model of a desired feature is generated by applying a learning algorithm to a lot of learning data. Such learning may be performed by a device itself in which the artificial intelligence is performed according to the present disclosure, or may be performed by a separate server/system.

The artificial intelligence model may include a plurality of neural network layers. At least one layer has at least one weight value, and an operation of the layer may be performed based on an operation result of a previous layer and at least one defined operation. Examples of the neural network may include a convolutional neural network (CNN), a deep neural network (DNN), a recurrent neural network (RNN), a restricted Boltzmann machine (RBM), a deep belief network (DBN), a bidirectional recurrent deep neural network (BRDNN), a deep Q-network, and a transformer. However, the neural network of the present disclosure is not limited to the above-described examples unless otherwise specified.

The learning algorithm is a method for training a predetermined target device (e.g., robot) by using a large number of learning data for the predetermined target device to make a decision or a prediction for itself. Examples of the learning algorithms may include a supervised learning algorithm, an unsupervised learning algorithm, a semi-supervised learning algorithm, or a reinforcement learning algorithm. However, the learning algorithm of the present disclosure is not limited to the above-described examples unless otherwise specified.

The machine-readable storage medium may be provided in the form of a non-transitory storage medium. Here, the "non-transitory storage medium" may refer to a tangible device and only indicate that this storage medium does not include a signal (e.g., electromagnetic wave), and this term does not distinguish a case where data is stored semi-permanently in the storage medium and a case where data is temporarily stored in the storage medium from each other. For example, the "non-transitory storage medium" may include a buffer in which data is temporarily stored.

According to an embodiment, the methods according to the various embodiments disclosed in the present disclosure may be included and provided in a computer program product. The computer program product may be traded as a commodity between a seller and a purchaser. The computer program product may be distributed in a form of the machine-readable storage medium (e.g., a compact disc read only memory (CD-ROM)), or may be distributed online (e.g., by download or upload) via an application store (e.g., PlayStore™) or directly between two user devices (e.g., smartphones). In case of the online distribution, at least a part of the computer program product (e.g., downloadable app) may be at least temporarily stored or temporarily provided in the machine-readable storage medium such as a server memory 110 of a manufacturer, a server memory of an application store, or a relay server memory.

Each of components (for example, modules or programs) according to the various embodiments of the present disclosure as described above may include a single entity or a plurality of entities, and some of the corresponding sub-components described above may be omitted or other sub-components may be further included in the various embodiments. Alternatively or additionally, some of the components (for example, the modules or the programs) may be integrated into one entity, and may perform functions performed by the respective corresponding components before being integrated in the same or similar manner.

Operations performed by the modules, the programs or other components according to the various embodiments may be executed in a sequential manner, a parallel manner, an iterative manner or a heuristic manner, at least some of the operations may be performed in a different order or be omitted, or other operations may be added.

Meanwhile, the term "~er/~or" or "module" used in the present disclosure may include a unit including hardware, software or firmware, and may be used interchangeably with the term, for example, a logic, a logic block, a component or a circuit. The "~er/~or" or "module" may be an integrally formed component, or a minimum unit or part performing one or more functions. For example, the module may include an application-specific integrated circuit (ASIC).

The various embodiments of the present disclosure may be implemented by software including an instruction stored in the machine-readable storage medium (for example, a computer-readable storage medium). A machine may be an apparatus that invokes the stored instruction from the storage medium, may be operated based on the invoked instruction, and may include the electronic apparatus (e.g., the electronic apparatus 100) according to the disclosed embodiments.

If the instruction is executed by the processor, the processor may directly perform a function corresponding to the instruction, or perform the function by using other components under control of the processor. The instruction may include a code provided or executed by a compiler or an interpreter.

Although the embodiments of the present disclosure are shown and described as above, the present disclosure is not limited to the above-mentioned specific embodiments, and may be variously modified by those skilled in the art to which the present disclosure pertains without departing from the gist of the present disclosure as claimed in the accompanying claims. These modifications should also be understood to fall within the scope and spirit of the present disclosure.

**Claims**

1. An electronic apparatus comprising:

   a memory storing quantized first weight data of a neural network model; and
   a processor configured to
   acquire a first latent vector that compressively represents an attribute of the first weight data,
   acquire a second latent vector that compressively represents an attribute of input data of the neural network model,
   acquire a third latent vector by combining the first latent vector with the second latent vector,
   acquire a plurality of quantization adjustment values for changing a quantization level of each of a plurality of weights included in the first weight data by inputting the third latent vector into a quantization adjustment value acquisition module, and
   acquire second weight data in which the first weight data is changed to be optimized for the input data based on the first weight data and the plurality of quantization adjustment values.

2. The apparatus as clamed in claim 1, wherein the processor is configured to

   train the quantization adjustment value acquisition module by backpropagating a loss used for training the neural network model to the quantization adjustment value acquisition module, and

   acquire the first latent vector by using the trained quantization adjustment value acquisition module.

3. The apparatus as clamed in claim 1, wherein the processor is configured to acquire the second latent vector by inputting the input data into a latent vector acquisition module,

   the latent vector acquisition module includes an encoder for encoding an input vector to acquire an encoding vector and a decoder for decoding the encoding vector to acquire an output vector, and
   the latent vector acquisition module is trained to acquire the second latent vector based on a loss defined based on a difference between the input vector and the output vector.

4. The apparatus as clamed in claim 1, wherein the processor is configured to acquire the third latent vector by concatenating the first latent vector with the second latent vector or by adding the first latent vector to the second latent vector.

5. The apparatus as clamed in claim 1, wherein the quantization adjustment value acquisition module includes a hidden vector acquisition module and a vector size change module,

   the hidden vector acquisition module acquires a plurality of hidden vectors corresponding to respective ones of a plurality of layers based on the third latent vector, and
   the vector size change module includes layers corresponding to the respective ones of the plurality of layers and acquires the plurality of quantization adjustment values by changing the plurality of hidden vectors to correspond to sizes of the respective ones of the plurality of layers.

6. The apparatus as clamed in claim 1, wherein the processor is configured to acquire the first weight data by quantizing unquantized weight data of the neural network model.

7. The apparatus as clamed in claim 1, wherein each of the plurality of quantization adjustment values has a value of 0 or 1, and

   the processor is configured to
   acquire a plurality of integer weights by adding the plurality of weights included in the first weight data to the plurality of quantization adjustment values corresponding to the respective ones of the plurality of weights, and
   acquire the second weight data by multiplying a step size of quantization by respective ones of the plurality of integer weights.

8. A method for controlling an electronic apparatus, the method comprising:

acquiring a first latent vector that compressively represents an attribute of quantized first weight data of a neural network model;
acquiring a second latent vector that compressively represents an attribute of input data of the neural network model;
acquiring a third latent vector by combining the first latent vector with the second latent vector;
acquiring a plurality of quantization adjustment values for changing a quantization level of each of a plurality of weights included in the first weight data by inputting the third latent vector into a quantization adjustment value acquisition module; and
acquiring second weight data in which the first weight data is changed to be optimized for the input data based on the first weight data and the plurality of quantization adjustment values.

9. The method as clamed in claim 8, wherein the acquiring of the first latent vector includes acquiring the first latent vector by backpropagating a predefined loss used for training the neural network model to a quantization adjustment value acquisition module.

10. The method as clamed in claim 8, wherein the acquiring of the second latent vector includes acquiring the second latent vector by inputting the input data into a latent vector acquisition module,

the latent vector acquisition module includes an encoder for encoding an input vector to acquire an encoding vector and a decoder for decoding the encoding vector to acquire an output vector, and
the latent vector acquisition module is trained to acquire the second latent vector based on a loss defined based on a difference between the input vector and the output vector.

11. The method as clamed in claim 8, wherein the acquiring of the third latent vector includes acquiring the third latent vector by concatenating the first latent vector with the second latent vector or by adding the first latent vector to the second latent vector.

12. The method as clamed in claim 8, wherein the quantization adjustment value acquisition module includes a hidden vector acquisition module and a vector size change module,

the hidden vector acquisition module acquires a plurality of hidden vectors corresponding to respective ones of a plurality of layers based on the third latent vector, and
the vector size change module includes layers corresponding to the respective ones of the plurality of layers and acquires the plurality of quantization adjustment values by changing the plurality of hidden vectors to correspond to sizes of the respective ones of the plurality of layers.

13. The method as clamed in claim 8, wherein the first weight data is acquired by quantizing unquantized weight data of the neural network model.

14. The method as clamed in claim 8, wherein each of the plurality of quantization adjustment values has a value of 0 or 1, and

in the acquiring of the second weight data,
a plurality of integer weights are acquired by adding the plurality of weights included in the first weight data to the plurality of quantization adjustment values corresponding to the respective ones of the plurality of weights, and
the second weight data are acquired by multiplying a step size of quantization by respective ones of the plurality of integer weights.

15. A non-transitory computer-readable recording medium including a program for executing a method for controlling an electronic apparatus, wherein the method includes

acquiring a first latent vector that compressively represents an attribute of quantized first weight data of a neural network model,
acquiring a second latent vector that compressively represents an attribute of input data of the neural network model,
acquiring a third latent vector by combining the first latent vector with the second latent vector,
acquiring a plurality of quantization adjustment values for changing a quantization level of each of a plurality of weights included in the first weight data by inputting the third latent vector into a quantization adjustment value acquisition module, and
acquiring second weight data in which the first weight data is changed to be optimized for the input data based on the first weight data and the plurality of quantization adjustment values.

# FIG. 1

100

# FIG. 2

# FIG. 3

OUTPUT VECTOR

2010

DECODER — 2012

ENCODING VECTOR

ENCODER — 2011

INPUT VECTOR

# FIG. 4

THIRD
LATENT VECTOR

2030

HIDDEN VECTOR
ACQUISITION MODULE — 2031

HIDDEN VECTOR

VECTOR SIZE
CHANGE MODULE — 2032

PLURALITY OF
QUANTIZATION
ADJUSTMENT VALUES

# FIG. 5

100

120

110 — MEMORY ⟷ PROCESSOR ⟷ INPUT UNIT —140

130 — COMMUNICATION UNIT ⟷ ⟷ OUTPUT UNIT —150

# FIG. 6

START

↓

ACQUIRE FIRST LATENT VECTOR THAT COMPRESSIVELY REPRESENTS ATTRIBUTE OF QUANTIZED FIRST WEIGHT DATA OF NEURAL NETWORK MODEL — S610

↓

ACQUIRE SECOND LATENT VECTOR THAT COMPRESSIVELY REPRESENTS ATTRIBUTE OF INPUT DATA OF NEURAL NETWORK MODEL — S620

↓

ACQUIRE THIRD LATENT VECTOR BY COMBINING FIRST LATENT VECTOR WITH SECOND LATENT VECTOR — S630

↓

ACQUIRE PLURALITY OF QUANTIZATION ADJUSTMENT VALUES FOR CHANGING QUANTIZATION LEVEL OF EACH OF PLURALITY OF WEIGHTS INCLUDED IN FIRST WEIGHT DATA BY INPUTTING THIRD LATENT VECTOR INTO QUANTIZATION ADJUSTMENT VALUE ACQUISITION MODULE — S640

↓

ACQUIRE SECOND WEIGHT DATA IN WHICH FIRST WEIGHT DATA IS CHANGED TO BE OPTIMIZED FOR INPUT DATA BASED ON FIRST WEIGHT DATA AND PLURALITY OF QUANTIZATION ADJUSTMENT VALUES — S650

↓

END

## INTERNATIONAL SEARCH REPORT

| | International application No. |
| | **PCT/KR2024/005614** |

| A. | CLASSIFICATION OF SUBJECT MATTER |
|---|---|

G06N 3/0495(2023.01)i; G06N 3/084(2023.01)i; G06N 3/082(2023.01)i

According to International Patent Classification (IPC) or to both national classification and IPC

| B. | FIELDS SEARCHED |
|---|---|

Minimum documentation searched (classification system followed by classification symbols)

G06N 3/0495(2023.01); G06N 3/04(2006.01); G06N 3/063(2006.01); G06N 3/08(2006.01); G10L 19/038(2013.01); G10L 19/16(2013.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 가중치(weight), 양자화(quantization), 잠재 벡터(latent vector), 결합(concatenation), 조정 값(adjusted value), 최적화(optimal)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022-212215 A1 (INTEL CORPORATION) 06 October 2022 (2022-10-06)<br>See claims 1, 6 and 11. | 1-15 |
| A | US 2021-0166706 A1 (ELECTRONICS AND TELECOMMUNICATIONS RESEARCH INSTITUTE) 03 June 2021 (2021-06-03)<br>See paragraph [0053]; and claim 1. | 1-15 |
| A | KR 10-2100977 B1 (GOOGLE LLC) 14 April 2020 (2020-04-14)<br>See paragraphs [0047]-[0049]. | 1-15 |
| A | WO 2022-221885 A2 (QUALCOMM INCORPORATED) 20 October 2022 (2022-10-20)<br>See paragraphs [0125]-[0128]. | 1-15 |
| A | KR 10-2021-0035702 A (SAMSUNG ELECTRONICS CO., LTD.) 01 April 2021 (2021-04-01)<br>See claim 1. | 1-15 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 August 2024** | **07 August 2024** |

| Name and mailing address of the ISA/KR | Authorized officer |
|---|---|
| **Korean Intellectual Property Office<br>Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| | International application No. |
|---|---|
| | **PCT/KR2024/005614** |

| Patent document cited in search report | | | Publication date (day/month/year) | Patent family member(s) | | | Publication date (day/month/year) |
|---|---|---|---|---|---|---|---|
| WO | 2022-212215 | A1 | 06 October 2022 | US | 2024-0152756 | A1 | 09 May 2024 |
| US | 2021-0166706 | A1 | 03 June 2021 | KR | 10-2021-0067488 | A | 08 June 2021 |
| | | | | KR | 10-2556096 | B1 | 18 July 2023 |
| | | | | US | 11581000 | B2 | 14 February 2023 |
| KR | 10-2100977 | B1 | 14 April 2020 | CN | 107038476 | A | 11 August 2017 |
| | | | | EP | 3374932 | A1 | 19 September 2018 |
| | | | | EP | 3374932 | B1 | 16 March 2022 |
| | | | | JP | 2019-509539 | A | 04 April 2019 |
| | | | | JP | 6706326 | B2 | 03 June 2020 |
| | | | | US | 10878319 | B2 | 29 December 2020 |
| | | | | US | 11948062 | B2 | 02 April 2024 |
| | | | | US | 2017-0220925 | A1 | 03 August 2017 |
| | | | | US | 2021-0089916 | A1 | 25 March 2021 |
| | | | | WO | 2017-136070 | A1 | 10 August 2017 |
| WO | 2022-221885 | A2 | 20 October 2022 | CN | 117136364 | A | 28 November 2023 |
| | | | | EP | 4323927 | A2 | 21 February 2024 |
| | | | | US | 2024-0144017 | A1 | 02 May 2024 |
| | | | | WO | 2022-221885 | A3 | 15 December 2022 |
| KR | 10-2021-0035702 | A | 01 April 2021 | CN | 112633464 | A | 09 April 2021 |
| | | | | DE | 102020123155 | A1 | 25 March 2021 |
| | | | | US | 2021-0089898 | A1 | 25 March 2021 |

Form PCT/ISA/210 (patent family annex) (July 2022)